# EUROPÄISCHE PATENTSCHRIFT

(11) **EP 2 024 238 B1**
(45) Veröffentlichungstag und Bekanntmachung des Hinweises auf die Patenterteilung: **06.01.2010**
(21) Anmeldenummer: 07728949.4
(22) Anmeldetag: 09.05.2007
(51) Int. Cl.: B65D 1/04

(54) **KARTUSCHE**
CARTRIDGE
CARTOUCHE

(30) Priorität: 13.05.2006 DE 102006022477
(43) Veröffentlichungstag der Anmeldung: 18.02.2009
(73) Patentinhaber: WashTec Holding GmbH, 86153 Augsburg (DE)
(72) Erfinder: AUER, Robert, 86391 Stadtbergen (DE)
(74) Vertreter: Charrier, Rapp & Liebau
(86) Internationale Anmeldenummer: PCT/EP2007/054497
(87) Internationale Veröffentlichungsnummer: WO 2007/131924

(56) Entgegenhaltungen:
- EP-A- 1 739 028
- EP-A- 1 767 461
- WO-A-2007/006109
- DE-C1- 19 632 326
- NL-C2- 1 006 453
- US-A1- 2003 210 141

## Beschreibung

Die Erfindung betrifft eine Kartusche zum Einsetzen in eine Aufnahmevorrichtung einer Fahrzeugbehandlungseinrichtung gemäß dem Oberbegriff des Anspruchs 1.

Bei bekannten Fahrzeugbehandlungseinrichtung, beispielsweise Fahrzeuglackieranlagen oder Fahrzcugwaschanlagen, werden die auf das Fahrzeug aufzubringenden flüssigen oder pastösen Medien oftmals aus Kartuschen entnonmmen.

So offenbart die EP 1 414 682 B1 eine Vorrichtung zur Versorgung einer Fahrzeugwaschanlage mit unterschiedlichen chemischen Zusatzstoffen, die in Kartuschen abgefüllt und diesen je nach Bedarf kontinuierlich entnehmbar sind. Die Kartuschen unterscheiden sich durch eine spezielle Formgebung voneinander, ebenso wie die Au fnahmevorrichtungen sich entsprechend unterscheiden. Hierdurch kann eine Kartusche nur an eine Aufnahmevorrichtung angeflanscht werden, die an die Formgebung der Kartusche angepasst ist. Somit kann eine Verwechslung der Zusatzstoffe zuverlässig ausgeschlossen werden. Dabei ist nachteilig, dass für jede Aufnahmevorrichtung eigens angepasste, unterschiedlich geformte Kartuschen hergestellt werden müssen. Dies erfordert für jede Kartuschenform ein eigenes, teures Herstellungswerkzeug, beispielsweise eine spezielle Gussform je Kartuschenform.

Weiter sind aus dem Stand der Technik Kartuschen bekannt, die mit speziellen Identifikationsmitteln zur automatischen Identifikation des Kartuscheninhalts versehen sind. So offenbart die DE 196 32 326 C1 eine Lackierstraße, bei der unterschiedliche Farben in Kleinbehälter abgefüllt sind. Diese Kleinbehälter tragen als Identifikationsmerkmal einen Barcode, der vor dem Öffnen des Kleinbehälters automatisch abgelesen werden kann. Zusätzlich kann die Lackierstraßensteuerung über den Barcode auch Applikationsdaten für die Steuerung der Sprühorgane liefern. Das Ablesen des Barcodes geschieht optisch über ein Barcodelesegerät vor dem Öffnen des Kleinbehälters, also bevor Farbe die Außenseite des Kleinbehälters verschmutzen kann. Ein zuverlässiges Ablesen des Barcodes während des Austrags der Farbe wäre hier nicht möglich, da die optische Erfassung des Barcodes wegen Farbverschmutzungen oder eines Farbnebels in der Umgebung der Kartusche nicht sichergestellt werden kann.

Einen weiteren mit einem Datenträger versehenen Verpackungsbehälter zeigt die DE 198 54 862 A1, wobei der Datenträger mittels einer speziellen besonderen Halterung bzw. separaten Schutzvorrichtung im Bereich einer vertikal verlaufenden Seitenwandung des Behälters auf der Oberfläche der Behälterwandung befestigt ist. Die dort gezeigten spezielle besondere Halterung bzw. separate Schutzvorrichtung dienen zum Schutz des Datenträgers vor mechanischen oder chemischen Einwirkungen von außen.

Auch die US 2003/0095253 A1 zeigt die Verwendung eines Datenträgers bei Behältern, insbesondere Flaschen aus Glas. Der Datenträger wird hierbei verwendet, um zu Erkennen, ob die Flasche bereits geöffnet oder beschädigt wurde, wobei die genaue Anordnung des Transponders am Behälter ohne weitere Bedeutung ist. Das Ausgießen des Flascheninhalts erfolgt dort über einen üblichen Flaschenhals.

Die Verwendung eines Datenträgers für Druckpatronen bei Ink-Jet-Druckem offenbart die EP 1 060 895, wobei der Datenträger dort an der senkrechten Zylinderaußenfläche der Druckerpatron angeordnet ist, so dass er von außen beim Greifen der austauschbaren Druckerpatron leicht beschädigt werden kann.

Aufgabe der Erfindung ist es deshalb, eine Kartusche bereitzustellen, die einen verwechslungssicheren, zuverlässigen und gegen äußere Einflüsse unempfindlichen Einsatz von Kartuschen in Fahrzeugbehandlungseinrichtungen, insbesondere in Fahrzeugwaschanlagen, ermöglicht.

Diese Aufgabe wird durch eine Kartusche zum Einsetzen in eine Aufnahmevorrichtung einer Fahrzeugbehandlungseinrichtung mit den Merkmalen des Anspruchs 1 gelöst. Vorteilhafte Ausgestaltungen und zweckmäßige Weiterbildungen der Erfindung sind in den Unteransprüchen angegeben.

Eine erfindungsgemäße Kartusche zum Einsetzen in eine Aufnahmevorrichtung einer Fahrzeugbehandlungseinrichtung weist einen Datenträger auf, der zur berührungslosen elektromagnetischen Signalübertragung eingerichtet und im Abstand zum Innenraum an der Kartusche angeordnet ist, der größer als eine Wandstärke der Kartusche ist, wobei ein Innenraumboden parallel und im Abstand zu einem Kartuschenboden verläuft, an dem der Datenträger angeordnet ist, oder der Innenraumboden zum Kartuschenboden hin teilweise geneigt verläuft und der Datenträger in einem Bereich des größeren Abstands zwischen Innenraumboden und Kartuschenboden angeordnet ist. Der Abstand ist hierbei so groß gewählt, dass die elektromagnetische Signalübertragung zwischen Datenträger und einer an der Aufnahmevorrichtung angeordneten elektromagnetischen Empfangs- und Sendeeinheit der Steuereinheit der Fahrzeugwaschanlage sichergestellt ist, also allenfalls unwesentliche Beeinflussungen auftreten können. Ist der Datenträger am Kartuschenboden angeordnet, der parallel und im Abstand zum Innenraumboden verläuft, kann auf einfache platzsparende Weise der nötige Abstand zwischen Datenträger und dem im Innenraum enthaltenen Medium sichergestellt werden. Wenn alternativ der Innenraumboden zum Kartuschenboden hin geneigt verläuft und der Datenträger im Bereich des größeren Abstands zwischen Innenraumboden und Kartuschenboden angeordnet ist, wird der in der Kartusche für den Innenraum zu Verfügung stehende Bereich besonders gut ausgenützt.

In einer besonders vorteilhaften Ausgestaltung der Erfindung ist der Datenträger ein passiver Transponder, so dass an der Kartusche keine eigene Energieversorgung für den Datenträger vorgesehen werden muss. Alternativ kann aber auch ein aktiver Transponder verwendet werden, der von einer integrierten Energieversorgungseinheit mit Energie versorgt wird.

In einer fertigungstechnisch besonders vorteilhaften Ausführung ist der Datenträger mittels eines Abstandselements an der Kartusche angeordnet. Hierdurch lässt sich der Datenträger an jeder beliebigen Stelle der Kartusche anbringen, wobei das Abstandselement vorteilhaft an die Kartusche angeformt sein kann.

Ist der Auslass im Bereich des geringsten Abstands zwischen Innenraumboden und Kartuschenboden angeordnet, so kann das Medium besonders leicht aus dem Innenraum der Kartusche abfließen, wodurch eine Verschwendung des Mediums vermieden wird.

Ein im Innenraum der Kartusche eingesetzter Behälter ermöglicht eine besonders geschützte Aufnahme des flüssigen oder pastösen Zusatzstoffes im Innenraum der Kartusche.

Über einen Einlass in der Kartusche lässt sich vorteilhaft der flüssige oder pastöse Zusatzstoff in die Kartusche einfüllen. Ebenso ermöglicht der Einlass es, einen in der Kartusche befindlichen festen, beispielsweise pulverförmigen Zusatzstoff durch Zugabe von Wasser in der Kartusche zu mischen, wodurch das Gewicht der noch nicht mit Wasser befüllten Kartusche beträchtlich vermindert wird.

Um den Füllstand der Zusatzstoffe an die Steuereinheit der Behandlungseinrichtung übermitteln zu können, sieht eine vorteilhafte Ausführung der Erfindung einen Füllstandssensor vor, der benachbart des Auslasses angeordnet ist.

Weitere Besonderheiten und Vorzüge der Erfindung ergeben sich aus der folgenden Beschreibung von bevorzugten Ausführungsbeispielen anhand der Zeichnungen. Es zeigen:
- **Fig. 1**: eine schematische perspektivische Darstellung eines ersten Ausführungsbeispiels einer erfindungsgemäßen Kartusche;
- **Fig. 2**: eine schematische perspektivische Darstellung eines zweiten Ausführungsbeispiels der erfindungsgemäßen Kartusche;
- **Fig. 3**: eine schematische perspektivische Darstellung eines dritten Ausführungsbeispiels der erfindungsgemäßen Kartusche.

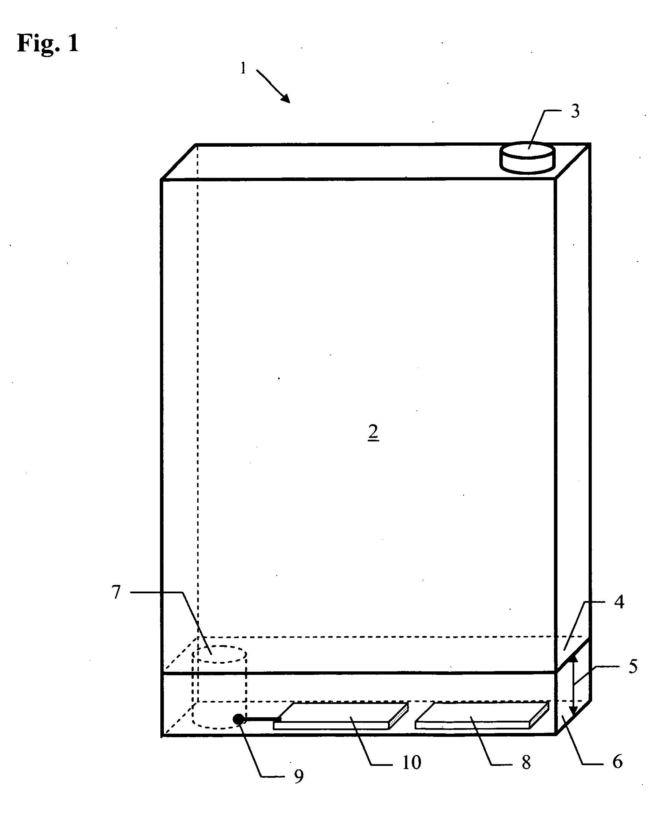

Die in Fig. 1 gezeigte Kartusche 1 besteht aus einem harten Kunststoff, wobei die Wände der Kartusche 1 überall gleich stark sind. In dem in Fig. 1 oberen Bereich der Kartusche weist diese einen Innenraum 2 auf, in den ein flüssiges oder pastöses Medium, hier ein hochkonzentrierter chemischer Zusatzstoff, eingefüllt werden kann. Bei den Medien bzw. Zusatzstoffen kann es sich um ein Shampoo, ein Trocknungshilfsmittel, Wachs oder einen Felgenreiniger oder eine Kombination dieser Zusatzstoffe in hochkonzentrierter, flüssiger oder pastöser Form handeln. Es ist aber auch möglich, die Zusatzstoffe in fester Form, beispielsweise als Pulver, in die Kartusche zu füllen und diesen durch Einfüllen von Wasser in einen Einlass 3 erst in der Kartusche 1 aufzulösen. Um eine Verschlechterung der Zusatzstoffe während einer längeren Standzeit der Kartusche 1 in der Fahrzeugwaschanlage zu vermeiden, ist der Einlass 3 luftdicht verschließbar. Üblicherweise bezieht der Betreiber einer Fahrzeugwaschanlage die Kartuschen bereits mit den eingefüllten Zusatzstoffen, um sie dann nur noch in eine Aufnahmevorrichtung an der Fahrzeugwaschanlage einzusetzen.

Die hier nicht gezeigte Aufnahmevorrichtung der Fahrzeugwaschanlage enthält an einzelnen Einsteckplätzen eine oder mehrere mit einer Steuereinheit der Fahrzeugwaschanlage verbundene elektromagnetische Empfangs- und Sendeeinheiten.

Der Innenraum 2 wird durch einen Innenraumboden 4 begrenzt, der parallel und im Abstand 5 zum Kartuschenboden 6 verläuft. Am einen Ende des Innenraumbodens 4 ist ein in Fig. 1 gestrichelt gezeichneter zylinderförmiger Auslass 7 vorgesehen. Der Auslass 7 ist durch den Kartuschenboden 6 versiegelt, um das Ausfließen des Zusatzstoffes vor dem Gebrauch zu verhindern. Das Öffnen des Auslasses 7 erfolgt mittels eines an der Aufnahmevorrichtung vorgesehenen Doms, wobei der Kartuschenboden 6 in diesem Bereich eine geringere Wandstärke aufweisen kann, um das Öffnen zu erleichtern. Alternativ kann der Auslass 7 auch durch einen von Hand abnehmbaren Deckel oder ähnliche Verschlussmittel verschlossen sein, wobei eine dünne Membran im Auslass 7 das Ausfließen des Zusatzstoffes vor dem Gebrauch verhindert.

In einer alternativen, hier nicht gezeigten Ausführungsform der Kartusche ist im Innenraum 1 ein kompressibler oder fester Behälter zur Aufnahme des Zusatzstoffes eingesetzt, der mit dem Auslass 7 und gegebenenfalls mit dem Einlass 3 dichtend verbunden ist.

Am Kartuschenboden 6 ist ein als passiver Transponder 8 ausgebildeter Datenträger angeordnet. Im Transponder 8 sind Daten zu dem im Innenraum 2 enthaltenen Medium gespeichert, beispielsweise die Art des Mediums, sein Verfallsdatum, eine Chargennummer, Angaben zum optimalen Verdünnungsverhältnis mit Wasser, etc. Die im Transponder 8 gespeicherten Daten können von der Steuereinheit der Fahrzeugwaschanlage über die elektromagnetischen Empfangs- und Sendeeinheiten der Aufnahmevorrichtung ausgelesen werden. Bei dem hier vorliegenden passiven Transponder 8 erfolgt auch die Energieübertragung für den Betrieb des Transponders 8 über die Empfangs- und Sendeeinheiten. Damit die Energie- und Datenübertragung, wobei letztere hochfrequent erfolgt, nicht durch das im Innenraum 2 enthaltene flüssige oder pastöse Medium beeinträchtigt oder ganz verunmöglicht werden, ist der Transponder 8 in ausreichendem Abstand zum Innenraumboden 4 am Kartuschenboden 6 angeordnet. Dieser Abstand beträgt in dem vorliegenden Ausführungsbeispiel ein Vielfaches der Wandstärke der Kartusche 1, wobei auch ein geringerer Abstand ausreichen würde. Um eine sichere Datenübertragung an den Transponder gewährleisten zu können, muss dieser Abstand aber größer sein als die übliche, für die Stabilität und Auslaufsicherheit der Kartusche 1 erforderliche Wandstärke. Eine unüblich dicke oder nur stellenweise erhöhte Verdickung der Wandstärke der Kartusche 1, beispielsweise im Bereich des Innenraumbodens 4, stelle keine übliche Wandstärke der Kartusche 1 in obigem Sinne dar.

Im Auslass 7 ist ein Füllstandssensor 9 angeordnet, der mit einer Auswerteelektronik 10 verbunden ist. Die Auswerteelektronik 10 ist mit dem Transponder 8 verbunden, so dass der durch den Füllstandssensor 9 ermittelte Füllstand des Zusatzstoffs im Innenraum 2 ebenfalls über die elektromagnetischen Empfangs- und Sendeeinheiten an die Steuereinheit der Fahrzeugwaschanlage übermittelt werden kann. Alternativ kann der Füllstandssensor 9 auch über eine an der Aufnahmevorrichtung vorgesehene Steckverbindung an die Steuereinheit der Fahrzeugwaschanlage angeschlossen werden. Ebenso ist eine Anbringung des Füllstandssensors 9 an einer anderen Stelle, beispielsweise am Innenraumboden 4, möglich.

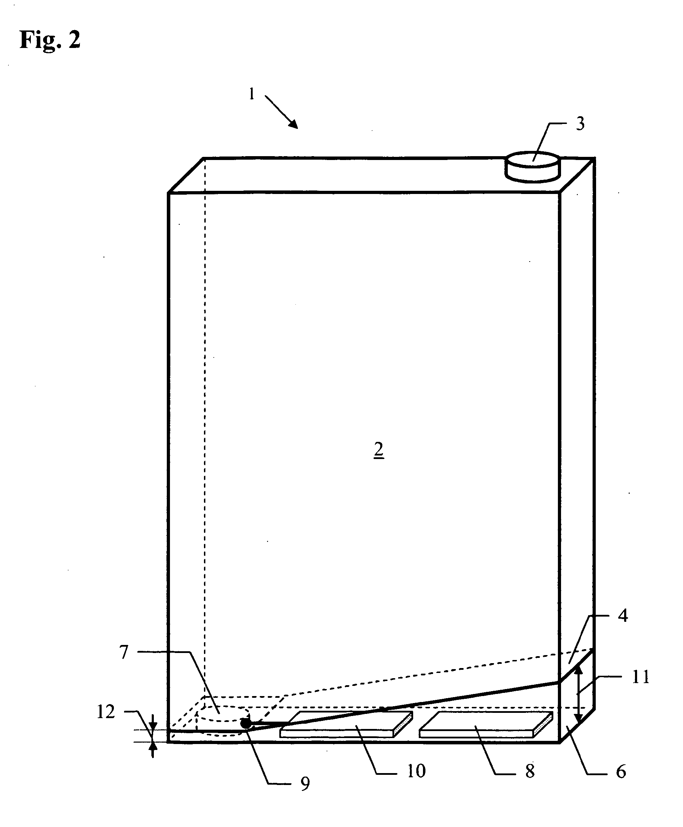

Die in Fig. 2 gezeigte Kartusche 1 entspricht im wesentlichen der aus Fig. 1, so dass im folgenden nur die Unterschiede beschrieben werden. Für gleiche Elemente werden gleiche Bezugszeichen verwendet.

Der Innenraumboden 4 verläuft hier nicht parallel zum Kartuschenboden 6, sondern neigt sich von dem größeren Abstand 11 an der in Fig. 2 rechten Seite der Kartusche 1 zum Kartuschenboden 6 im Bereich des Auslasses 7 hin. Der Auslass 7 ist hier ebenfalls zylinderförmig ausgebildet, aber aufgrund des kleineren Abstands 12 zwischen Innenraumboden 4 und Kartuschenboden 6 im Bereich des Auslasses 7 wesentlich kürzer als der in Fig. 1 gezeigte. Um eine Störung der elektromagnetischen Übertragung zwischen Transponder 8 und der Empfangs- und Sendeeinheit in der Aufnahmevorrichtung durch die Zusatzstoffe zu vermeiden, ist der Transponder 8 im Bereich des größeren Abstands zwischen dem geneigten Innenraumboden 4 und dem Kartuschenboden 6 angeordnet.

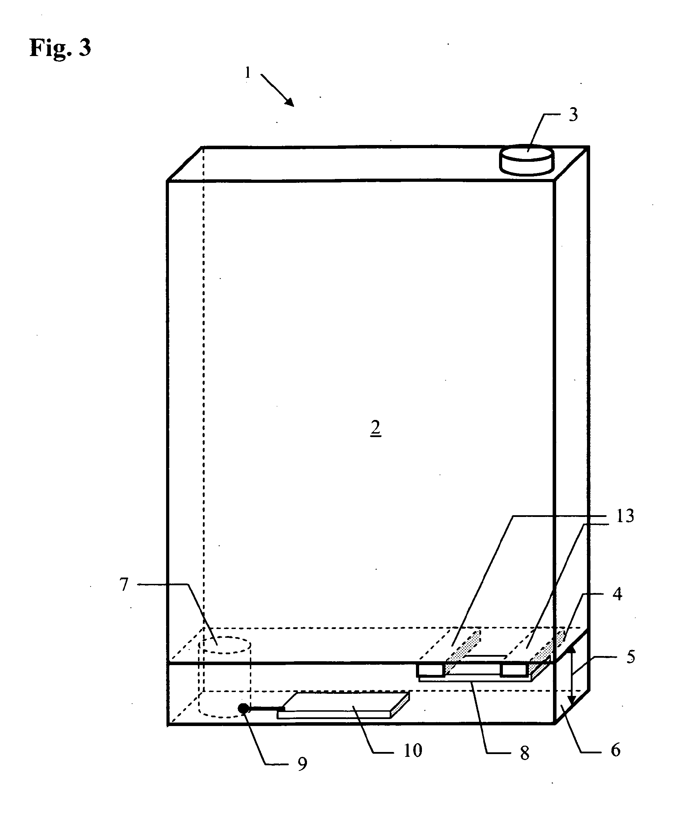

Das in Fig. 3 dargestellte Ausführungsbeispiel unterscheidet sich nur durch die Anordnung des Transponders 8 an der Kartusche 1 von der Ausführung nach Fig. 1. Hierbei wurde der Kartuschenboden 6 weggelassen, so dass die Seitenwände der Kartusche 1 über den Innenraumboden 4 hinaus ragen, um in entsprechende Ausnehmungen der Aufnahmevorrichtung eingreifen zu können. Der Transponder 8 ist über zwei als Abstandshalter 13 ausgebildete Abstandselemente am Innenraumboden 4 der Kartusche 1 angeordnet, wodurch der notwendige Abstand zu dem im Innenraum 2 bevorrateten flüssigen oder pastösen Medium sichergestellt ist. Dies kann aber auch über andere Abstandselemente erfolgen, beispielsweise durch eine erhöhte Wandstärke des Innenraumbodens 4 in diesem Bereich. Sofern das Abstandselemente durch eine Verdickung oder Aufweitung der Wandstärke des Innenraumbodens 4 oder der Kartusche 1 gebildet ist, ist diese vergrößerte Wandstärke nicht die übliche Wandstärke, die für die Bemessung des zur sicheren Funktion des Transponders 8 notwendigen Abstands relevant ist. Durch das Abstandselement wird sichergestellt, dass der Transponder 8 den für einen ordnungsgemäßen Betrieb notwendigen Abstand vom Zusatzstoff im Innenraum 2 einhält. Die Abstandselemente können auch bei dem in Fig. 2 gezeigten Ausführungsbeispiel vorgesehen werden.

## Patentansprüche

1. Kartusche (1) zum Einsetzen in eine Aufnahmevorrichtung einer Fahrzeugbehandlungseinrichtung, mit einem Innenraum (2) zur Aufnahme eines flüssigen oder pastösen Mediums, einem Auslass (7), der zum Gebrauch der Kartusche (1) geöffnet werden kann, und einem Datenträger (8), der zur berührungslosen elektromagnetischen Signalübertragung eingerichtet und in einem Abstand (5) zum Innenraum (2) an der Kartusche (1) angeordnet ist, der größer als eine Wandstärke der Kartusche (1) ist, **dadurch gekennzeichnet, dass** ein Innenraumboden (4) parallel und im Abstand (5) zu einem Kartuschenboden (6) verläuft, an dem der Datenträger (8) angeordnet ist, oder der Innenraumboden (4) zum Kartuschenboden (6) hin teilweise geneigt verläuft und der Datenträger (8) in einem Bereich des größeren Abstands (11) zwischen Innenraumboden (4) und Kartuschenboden (6) angeordnet ist.

2. Kartusche (1) nach Anspruch 1, **dadurch gekennzeichnet, dass** der Datenträger (8) ein passiver Transponder ist.

3. Kartusche (1) nach Anspruch 1 oder 2, **dadurch gekennzeichnet, dass** der Datenträger (8) mittels eines oder mehrerer Abstandselemente (13) an der Kartusche (1) angeordnet ist.

4. Kartusche (1) nach einem der vorangehenden Ansprüche, **dadurch gekennzeichnet, dass** der Auslass (7) im Bereich des kleineren Abstands (12) zwischen Innenraumboden (4) und Kartuschenboden (6) angeordnet ist.

5. Kartusche (1) nach einem der vorangehenden Ansprüche, **dadurch gekennzeichnet, dass** im Innenraum (2) ein Behälter zur Aufnahme des flüssigen oder pastösen Mediums eingesetzt und mit dem Auslass (7) verbunden ist.

6. Kartusche (1) nach einem der vorangehenden Ansprüche, **dadurch gekennzeichnet, dass** die Kartusche (1) einen Einlass (3) zum Einfüllen des flüssigen oder pastösen Mediums in den Innenraum (2) oder den Behälter aufweist.

7. Kartusche (1) nach einem der vorangehenden Ansprüche, **dadurch gekennzeichnet, dass** ein Füllstandssensor (9) benachbart des Auslasses (7) vorgesehen ist.

8. Kartusche (1) nach Anspruch 7, **dadurch gekennzeichnet, dass** der Füllstandssensor (9) mit einer Auswerteelektronik (10) und/oder dem Datenträger (8) verbunden ist.

## Claims

1. Cartridge (1) for insertion in a receiving device of a vehicle treating installation, with an internal space (2) for receiving a liquid or pastey medium, an outlet (7) which can be opened to use the cartridge (1), and a data carrier (8) which is set up for contactless electromagnetic signal transmission and arranged on the cartridge (1) a distance (5) from the internal space (2) greater than a wall thickness of the cartridge (1), **characterised in that** an internal space bottom (4) runs parallel to and a distance (5) from a cartridge bottom (6) on which the data carrier (8) is arranged, or the internal space bottom (4) runs partly inclined in relation to the cartridge bottom (6) and the data carrier (8) is arranged in an area of the greater distance (11) between the internal space bottom (4) and the cartridge bottom (6).

2. Cartridge (1) according to claim 1, **characterised in that** the data carrier (8) is a passive transponder.

3. Cartridge (1) according to claim 1 or 2, **characterised in that** the data carrier (8) is arranged on the cartridge (1) by means of one or more spacing elements (13).

4. Cartridge (1) according to one of the preceding claims, **characterised in that** the outlet (7) is arranged in the area of the smaller distance (12) between the internal space bottom (4) and the cartridge bottom (6).

5. Cartridge (1) according to one of the preceding claims, **characterised in that** a container for receiving the liquid or pastey medium is inserted in the internal space (2) and connected to the outlet (7).

6. Cartridge (1) according to one of the preceding claims, **characterised in that** the cartridge (1) exhibits an inlet (3) for introducing the liquid or pastey medium into the internal space (2) or the container.

7. Cartridge (1) according to one of the preceding claims, **characterised in that** a filling level sensor (9) is provided in the vicinity of the outlet (7).

8. Cartridge (1) according to claim 7, **characterised in that** the filling level sensor (9) is connected to an electronic evaluation unit (10) and/or to the data carrier (8).

## Revendications

1. Cartouche (1) à placer dans un organe de réception d'un dispositif de traitement de véhicule, avec un compartiment interne (2) servant à recevoir un produit liquide ou pâteux, une sortie (7) pouvant être ouverte afin d'utiliser la cartouche (1) et un support de données (8) qui est aménagé pour un transfert de signaux électromagnétiques sans contact et disposé sur la cartouche (1) à distance (5) du compartiment interne (2), qui est plus grand qu'une épaisseur de paroi de la cartouche (1), **caractérisé en ce qu'**un fond de compartiment interne (4) est parallèle à un fond de cartouche (6) et à distance de celui-ci, sur lequel le support de données (8) est disposé, ou **en ce que** le fond du compartiment interne (4) est partiellement incliné en direction du fond de cartouche (6) et le support de données (8) est disposé dans une zone du plus grand écart (11) entre le fond du compartiment interne (4) et le fond de cartouche (6).

2. Cartouche (1) selon la revendication 1, **caractérisée en ce que** le support de données (8) est un transpondeur passif.

3. Cartouche (1) selon la revendication 1 ou 2, **caractérisée en ce que** le support de données (8) est disposé sur la cartouche à l'aide d'un ou plusieurs éléments d'écartement (13).

4. Cartouche (1) selon l'une des revendications précédentes, **caractérisé en ce que** la sortie (7) est placée au niveau de l'écart plus petit (12) entre le fond du compartiment interne (4) et le fond de cartouche (6).

5. Cartouche (1) selon l'une des revendications précédentes, **caractérisé en ce que** dans le compartiment interne (2) est introduit un récipient servant à recevoir le produit liquide ou pâteux et est relié à la sortie (7).

6. Cartouche (1) selon l'une des revendications précédentes, **caractérisé en ce que** la cartouche (1) présente une entrée(3) permettant d'introduire le produit liquide ou pâteux dans le compartiment interne (2) ou dans le récipient.

7. Cartouche (1) selon l'une des revendications précédentes, **caractérisé en ce qu'**il est prévu une sonde de niveau (9) voisine à la sortie (7).

8. Cartouche (1) selon la revendication 7, **caractérisé en ce que** la sonde de niveau (9) est reliée à un dispositif électronique d'évaluation (10) et/ou au support de données (8).
